# EUROPEAN PATENT SPECIFICATION

(11) **EP 2 123 977 B1**
(45) Date of publication and mention of the grant of the patent: **05.04.2017**
(21) Application number: 08704001.0
(22) Date of filing: 28.01.2008
(51) Int. Cl.: F22B 37/20, G21D 1/00

(54) **TUBE SUPPORT PLATE OF STEAM GENERATOR**
ROHRSTÜTZPLATTE EINES DAMPFERZEUGERS
PLAQUE DE SUPPORT DE TUBE D'UN GÉNÉRATEUR DE VAPEUR

(30) Priority: 27.02.2007 JP 2007046532
(43) Date of publication of application: 25.11.2009
(73) Proprietor: Mitsubishi Heavy Industries, Ltd., Tokyo 108-8215 (JP)
(72) Inventor: MUROYA, Itaru, Takasago-shi Hyogo 676-8686 (JP); SHIMAMURA, Kengo, Kobe-shi Hyogo 652-8585 (JP); KAWAKAMI, Ryoichi, Kobe-shi Hyogo 652-8585 (JP)
(74) Representative: Hoffmann Eitle
(86) International application number: PCT/JP2008/051192
(87) International publication number: WO 2008/120487

(56) References cited:
- EP-A1- 0 184 344
- EP-A1- 0 568 713
- CA-A- 1 013 631
- JP-A- 48 032 235
- JP-A- 54 053 346
- JP-A- 58 203 303
- JP-A- 61 119 999
- JP-A- 2003 279 287
- JP-A- 2004 045 014
- US-B1- 6 498 827

## Description

### Technical Field

This invention relates to a tube support plate of a steam generator, which is designed to be capable of decreasing a pressure loss and ensuring sufficient strength.

### Background Art

In a pressurized water nuclear power plant, primary cooling water heated in a nuclear reactor (reactor) is supplied to a steam generator. In the steam generator, secondary cooling water is heated by the heat of the primary cooling water to generate secondary steam. This secondary steam is supplied to a steam turbine to rotate the steam turbine, thereby driving an electric generator.

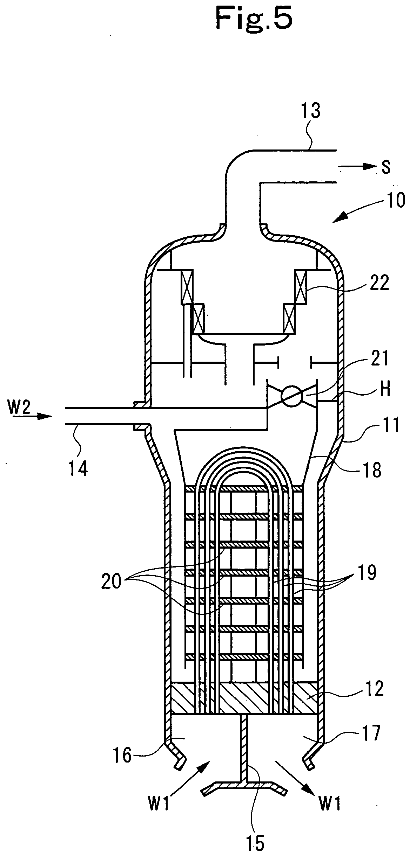

The structure of a steam generator 10 used in a pressurized water nuclear power plant will be explained by reference to Fig. 5.

As shown in Fig. 5, a tube plate 12 is integrally connected to a lower portion of a vertical outer tube 11 of the steam generator 10. A main steam pipe 13 and a feed water pipe 14 are connected to an upper portion of the outer tube 11.

The tube plate 12 is a plate-shaped member with a large wall thickness, and is disposed in such a state as to close the lower portion of the outer tube 11. Many holes are formed in the tube plate 12.

The space below the tube plate 12 is separated into a high temperature side water chamber 16 and a low temperature side water chamber 17 by a partition plate 15.

An inner tube 18 is disposed within the outer tube 11. A multiplicity of inverted U-shaped heat transfer tubes 19 are arranged within the inner tube 18. Although schematically shown in the drawing, the number of the heat transfer tubes 19 arranged is very large. These heat transfer tubes 19 are arranged in a vertically extending state, and the upper end of each heat transfer tube 19 is curved in an inverted U shape. Both ends, on the lower side, of each heat transfer tube 19 are inserted into many holes formed in the tube plate 12, fixed by being enlarged, and connected to the high temperature side water chamber 16 and the low temperature side water chamber 17, respectively.

Furthermore, tube support plates 20 extending in a horizontal direction are arranged at a plurality of locations along the height direction of the inner tube 18. Through-holes, through which the many heat transfer tubes 19 pass, are formed in the tube support plate 20. The tube support plate 20 is used to prevent vibration of the heat transfer tube 19 and maintain spacing between the heat transfer tubes 19. That is, since the many heat transfer tubes 19 pass through the tube support plates 20, the spacing between the heat transfer tubes 19 can be maintained, and the vibration of the heat transfer tubes 19 can be prevented. Moreover, when a lateral load acts, for example, in an earthquake, this lateral load is supported by the tube support plates 20.

In an upper portion of the outer tube 11, a steam separator 21 and a steam dryer 22 are disposed.

Primary cooling water W1 heated in a reactor is supplied to the high temperature side water chamber 16, flowed in the heat transfer tubes 19, passed through the low temperature side water chamber 17, and returned to the reactor.

On the other hand, secondary cooling water W2
is supplied through the feed water pipe 14 into a space between the outer tube 11 and the inner tube 18 (the space is a downcomer), and then flowed downward within the downcomer. The secondary cooling water W2 enters the interior of the inner tube 18 from the lower end of the inner tube 18, and ascends within the inner tube 18. While ascending and flowing within the inner tube 18, the secondary cooling water W.2 receives heat from the primary cooling water W1 via the heat transfer tubes 19 to undergo heating. Thus, steam S is produced, and this steam S passes through the steam separator 21, the steam dryer 22, and the main steam pipe 13 for feeding to a steam turbine.

In the above-described manner, with the steam S being generated, the water level H within the downcomer is kept nearly constant.

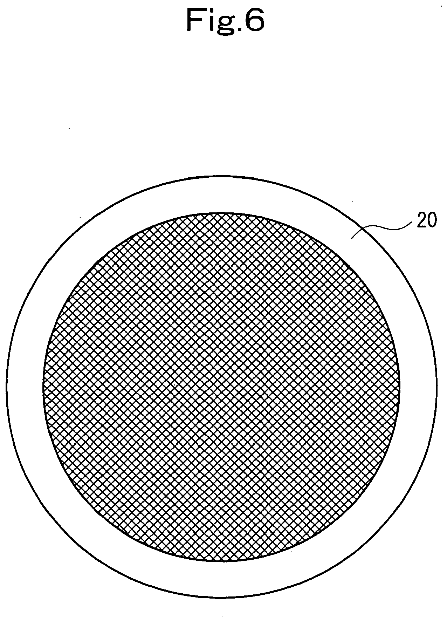

Fig. 6 is a plan view of the tube support plate 20 viewed from above. Many (for example, several thousand) through-holes 20a are formed in a central portion of the tube support plate 20 (in the drawing, the central portion is a crosshatched portion).

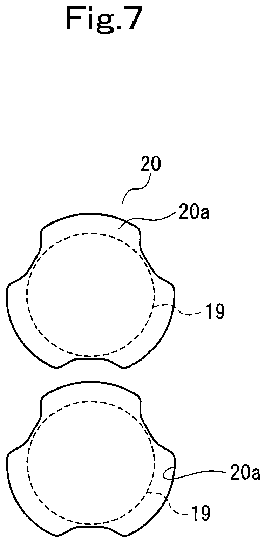

So far, the shape of the through-hole 20a has been a three-leaved shape (the shape of clover), as shown in Fig. 7. In Fig. 7, only two of the through-holes 20a are shown, but actually, the tube support plate 20 is laid with the through-holes 20a of such a three-leaved shape arranged longitudinally and transversely in a lattice pattern.

The through-hole 20a performs the function of supporting the heat transfer tube 19, and the function of a flow path for flowing the secondary cooling water W and steam S ascending and passing within the inner tube 18.

[Patent Document 1] Japanese Unexamined Patent Publication No. 1991-255892

### Disclosure of the Invention

### Problems to be solved by the invention

If a pressure loss, which occurs during passage of the secondary cooling water W2 and steam S through the through-holes 20a of the tube support plate 20, is great, instability of the water level H in the downcomer portion increases.

If the water level H in the downcomer portion becomes so unstable that the height of the water level oscillates, water reaches the steam separator 21, lowering the efficiency of the steam generator 10.

Thus, there is need to decrease the pressure loss at the tube support plate 20. If the hole area of the through-hole 20a is increased to decrease the pressure loss, however, the strength of the tube support plate 20 lowers.

If the steam generator 10 is subjected to a heavy lateral load by an earthquake, for example, the lateral load is imposed on the tube support plate 20 as well.
If, on this occasion, the in-plane compressive strength of the tube support plate 20 is low, the through-hole 20a may collapse and its edge may touch the heat transfer tube 19, thereby deforming (damaging) the heat transfer tube 19. To prevent the occurrence of such an event, the tube support plate 2 0 needs to have a certain in-plane strength.

EP 0 568 713 A1 describes a support grid for the support of the tubes of a tube bundle against lateral deflections with respect to the tube axis. The support grid consists of at least two discs which are arranged at a small distance parallel to another and are linked together.

Both are provided with through holes having a diameter corresponding to the outer diameter of the tubes to be introduced. Seen in the direction of the tube pitch main axes, each nth such through hole in each nth line is concentrically widened.

Also the steam generator tube support according to EP 0 184 344 A1 has a plurality of holes arranged in a given array. Each of the holes has an axis, an interior surface and a plurality of lands projecting radially inwardly from the interior surface and having contact surfaces at their inner ends for supporting the tubes. The lands are tapered at least at one of their ends so as to form a conical guide structure from the interior surface to the contact surface in order to facilitate the insertion of a tube through the hole.

CA 1 013 631 A also describes a tube support plate in a heat exchanger. Each hole has at least three bights that provide individual fluid passageways when the associated tube is lodged in place. At least three inwardly protruding members that separate the bights restrain tube movement. Each of these members define arcs of a circle that has a diameter which is only slightly larger than the outside diameter of the respective tube. CA 1 013 631 A, EP 0 184 344 A1 and EP 0 568 713 A1 represent the closest prior art.

The present invention has been accomplished in the light of the above-described prior art. It is an object of the invention to provide a tube support plate of a steam generator involving a small pressure loss and having sufficient strength.
This object is solved by a tube support plate with the features of claim 1.

### Means for Solving the Problems

The present invention, configured to solve the above problems, is a tube support plate of a steam generator, which is adapted to be disposed within the steam generator and has many through-holes formed therein for passage
of heat transfer tubes, wherein
a hole shape of the through-hole is a hexagonal shape, and every other side of sides forming the hexagonal shape has a protrusion formed therein, the protrusion protruding toward a center of the
through-hole, and
an arrangement of the through-holes is such that many horizontal rows of the through-holes are arranged in parallel, each row including the
through-holes arranged in a straight line with a constant pitch, and that positions of the through-holes arranged in each row of the through-holes
are shifted by a half of the pitch from corresponding positions of the through-holes arranged in the adjacent row of the through-holes.

The tube support plate is also characterized in that end portions of the sides are curved.

### Effects of the Invention

According to the present invention, the hole shape of the through-hole is a hexagonal shape, and the arrangement of the through-holes is a so-called honeycomb arrangement. Thus, the area of the through-hole can be increased to decrease the pressure loss, compared with the prior art, and the in-plane strength can be rendered equal to that of the prior art.

### Brief Description of the Drawings

[Fig. 1] Fig. 1 is a plan view showing a tube support plate according to an embodiment of the present invention.
[Fig. 2] Fig. 2 is a plan view showing through-holes formed in the tube support plate of the present embodiment.
[Fig. 3] Fig. 3 is a plan view showing the through-holes formed in the tube support plate of the present embodiment.
[Fig. 4 (a)] Fig. 4 (a) is a stress distribution view in which compressive load is imposed on the tube support plate having the through-holes of a three-leaved shape (clover shape).
[Fig. 4 (b)] Fig. 4 (b) is a stress distribution view in which compressive load is imposed on the tube support plate having the through-holes of a hexagonal shape.
[Fig. 5] Fig. 5 is a configurational drawing showing a steam generator.
[Fig. 6] Fig. 6 is a plan view showing a conventional tube support plate.
[Fig. 7] Fig. 7 is a plan view showing through-holes formed in the conventional tube support plate.

### Description of the Numerals and Symbols

- 10: Steam generator
- 11: Outer tube
- 12: Tube plate
- 13: Main steam pipe
- 14: Feed water pipe
- 15: Partition plate
- 16: High temperature side water chamber
- 17: Low temperature side water chamber
- 18: Inner tube
- 19: Heat transfer tube
- 20: Tube support plate
- 20a: Through-hole
- 21: Steam separator
- 22: Steam dryer
- W1: Primary cooling water
- W2: Secondary cooling water
- S: Stearn
- 100: Through-hole
- 101 to 106: Side
- 100a, 100b, 100c: Protrusion
- 200: Tube support plate
- 210: Heat transfer tube
- L: Ligament

### Best Mode for Carrying Out the Invention

The best mode for carrying out the present invention will now be described in detail based on an embodiment.

### Embodiment

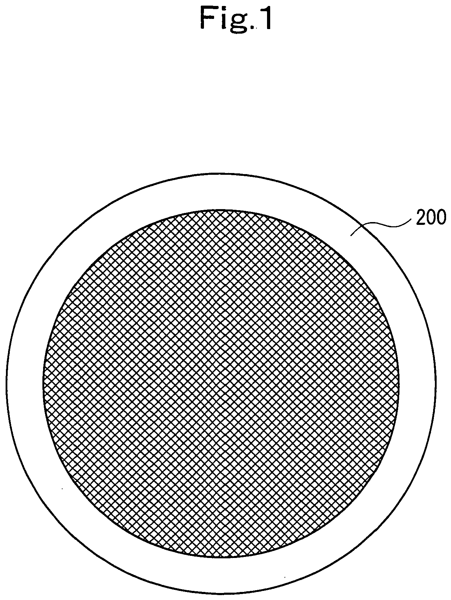

Fig. 1 is a plan view of a tube support plate 200 according to the embodiment, which is viewed from above. Many (for example, several thousand) through-holes 100 are formed in a central portion of the tube support plate 200 (in Fig. 1, the central portion is a crosshatched portion).

The tube support plate 200 is disposed in a horizontal state within a steam generator having the same structure as that shown in Fig. 5. Heat transfer tubes 210 pass through the through-holes 100 in a vertical direction.

The numeral "100" is used to show the through-hole in a generic manner. When the respective through-holes are shown in a distinguished manner, numerical values in the hundreds, such as the numerals "110, 120, ...", are used for explanation.

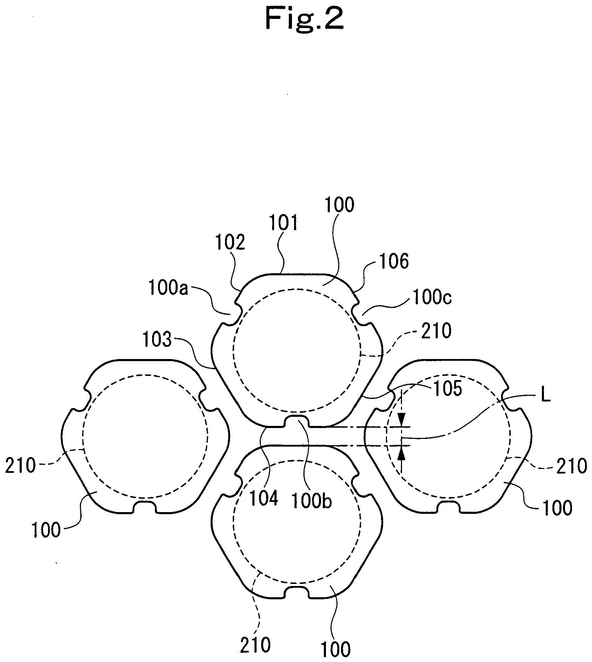

The shape of the through-hole 100 is a hexagonal shape, as shown in Fig. 2. That is, the hole shape of the through-hole 100 is a hexagonal shape surrounded by six sides, 101, 102, 103, 104, 105 and 106. In addition, opposite end portions of the respective sides, 101, 102, 103, 104, 105 and 106, are curved, and portions of the adjacent sides connected together are in a curved shape (a curved shape convex toward the outer periphery as viewed from the center of the hole) .

Of the six sides 101, 102, 103, 104, 105 and 106, the alternate sides 102, 104 and 106 have protrusions 100a, 100b and 100c formed therein which protrude toward the center of the through-hole 100 (namely, toward the heat transfer tube 210). The respective protrusions 100a, 100b and 100c are formed in middle portions of the sides 102, 104 and 106, and perform the function of maintaining clearance with respect to the heat transfer tube 210, and the function of supporting the heat transfer tube 210.

Furthermore, the space between the through-hole 100 and the outer peripheral surface of the heat transfer tube 210 defines a flow path for secondary cooling water and steam.

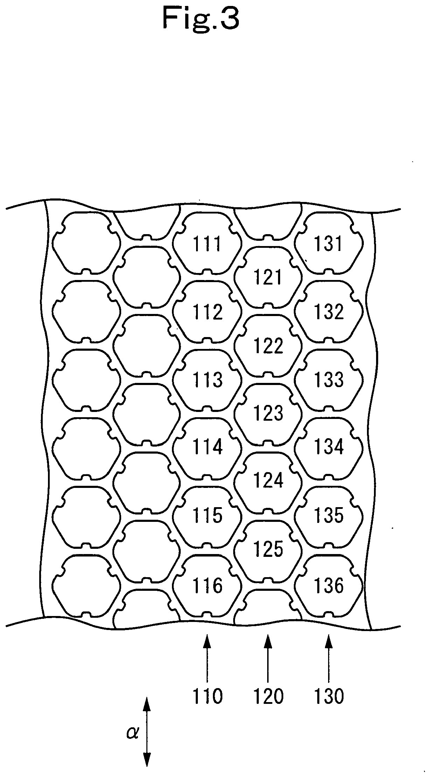

Next, the arrangement of the through-holes 100 will be explained by reference to Fig. 3.

As shown in Fig. 3, through-holes 111, 112, 113, 114, 115 ... are arranged in a straight line with a constant pitch to constitute a longitudinal row 110 of the through-holes, through-holes 121, 122, 123, 124, 125 ... are arranged in a straight line with a constant pitch to constitute a longitudinal row 120 of the through-holes, and through-holes 131, 132, 133, 134, 135 ... are arranged in a straight line with a constant pitch to constitute a longitudinal row 130 of the through-holes.

A multiplicity of such longitudinal rows 110, 120, 130 ... of the through-holes are arranged in parallel.

The positions of the through-holes arranged in each horizontal row of the through-holes are shifted, along the direction of the straight-line arrangement of the through-holes (i.e., a-direction), by a half of the pitch from the corresponding positions of the through-holes arranged in the adjacent horizontal row of the through-holes.

For example, the through-holes 111, 112, 113, 114, 115 ... of the longitudinal row 110 of the through-holes and the through-holes 12 1, 122, 123, 124, 125 ... of the longitudinal row 120 of the through-holes are arranged, shifted by a half of the pitch, with respect to the a-direction.

The same shifted arrangement is common to the other adjoining longitudinal rows of the through-holes.

So to speak, the through-holes 100 are in a honeycomb arrangement (triangular arrangement). The triangular arrangement refers, for example, to an arrangement in which the hole centers of the through-holes 111, 112 and 121 are connected by lines to form a triangle.

In accordance with the honeycomb arrangement (triangular arrangement) of the through-holes 100, the positions of arrangement of the heat transfer tubes 210 are also set.

In the present embodiment, the hole shape of the through-hole 100 is a hexagonal shape. Thus, the area of the hole is so wide that the pressure loss was successfully decreased by about 30% compared with the prior art (the three-leaved shape shown in Fig. 7).

Moreover, the state of arrangement of the through-holes 100 is the honeycomb arrangement (triangular arrangement). Thus, it became possible to ensure the same in-plane strength of the tube support plate 200 as that of the prior art.

It was confirmed by analysis using the finite element method that the strength of the tube support plate 200 could be ensured as described above.

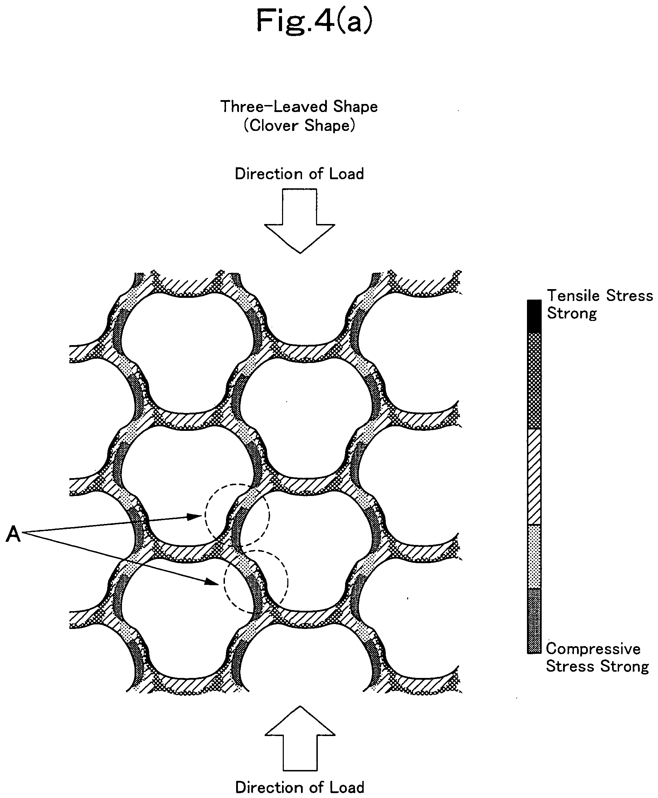

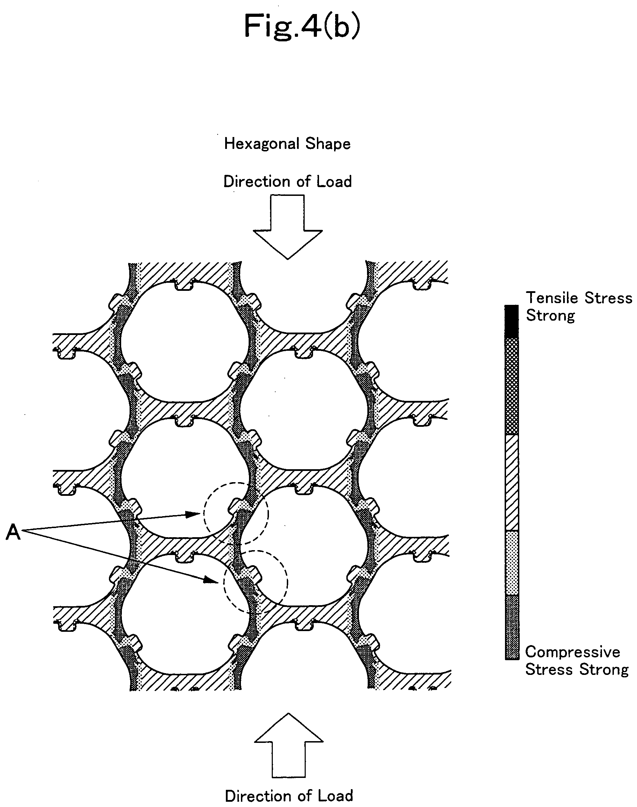

The results of confirmation of the strength by the finite element method will be described using Figs. 4(a) and 4(b).

Fig. 4 (a) is a stress distribution view in which compressive load is imposed on the tube support plate having the through-holes of a three-leaved shape (clover shape) shown in Fig. 7. Fig. 4(b) is a stress distribution view in which compressive load is imposed on the tube support plate having the through-holes of a hexagonal shape shown in Fig. 2.

Fig. 4(a) shows that with the through-holes of the three-leaved shape (clover shape), flexural deformation occurs in A portions in the drawing.

Fig. 4(b), on the other hand, shows that with the through-holes of the hexagonal shape, flexural deformation occurs minimally.

As noted above, the through-holes of the hexagonal shape, increased in the hole area as compared with the through-holes of the three-leaved shape (clover shape), were kept from flexural deformation. As a result, it was confirmed that even when the ligament L shown in Fig. 2 was rendered small, strength comparable to that of the conventional three-leaved type (clover type) was obtained successfully.

### Industrial Applicability

The present invention can be applied not only to a tube support plate employed in a steam generator for use in a nuclear power plant, but also to tube support plates employed in various steam generators having many heat transfer tubes.

## Claims

1. A tube support plate (20) of a steam generator (10), which is adapted to be disposed within the steam generator (10) and has a plurality of through-holes (100) formed therein for passage of heat transfer tubes (19), wherein
a hole shape of the through-hole (100) is a hexagonal shape, and every alternate side of the sides forming the hexagonal shape has a protrusion (100a, 100b, 100c) formed therein, the protrusion (100a, 100b, 100c) protruding toward a center of the through-hole (100),
an arrangement of the through-holes (100) is such that a plurality of rows of the through-holes (100) are arranged in parallel, each row including the through-holes (100) arranged in a straight line with a constant pitch, and that positions of the through-holes (100) arranged in each row (110) of the through-holes (100) are shifted by a half of the pitch from corresponding positions of the through-holes (100) arranged in the adjacent row (120) of the through-holes (100), and
end portions of the sides (101,102,103,104,105,106) are curved
**characterized in that**
portions of the adjacent sides connected together are in curved shape convex toward an outer periphery as viewed from the center of the through-hole (100).

## Patentansprüche

1. Rohrstützplatte (20) eines Dampferzeugers (10), die dazu beschaffen ist, innerhalb des Dampferzeugers (10) angeordnet zu werden und eine Vielzahl an in ihr gebildeten Durchgangslöchern (100) für die Durchführung von Wärmetauscherrohren (19) besitzt, wobei
es sich bei einer Lochform des Durchgangsloches (100) um eine sechseckige Form handelt und jede zweite Seite der die sechseckige Form bildenden Seiten einen in ihr gebildeten Vorsprung (100a, 100b, 100c) besitzt, wobei der Vorsprung (100a, 100b, 100c) zu einer Mitte des Durchgangsloches (100) hin vorspringt,
eine Anordnung der Durchgangslöcher (100) derart ist, dass eine Vielzahl an Reihen der Durchgangslöcher (100) parallel angeordnet sind, wobei jede die Durchgangslöcher (100) enthaltende Reihe in einer geraden Linie mit einem konstanten Zwischenraum angeordnet ist, und dass Positionen der in jeder Reihe (110) der Durchgangslöcher (100) angeordneten Durchgangslöcher (100) um einen halben Zwischenraum von entsprechenden Positionen der in der benachbarten Reihe (120) der Durchgangslöcher (100) angeordneten Durchgangslöcher (100) versetzt sind, und
Endbereiche der Seiten (101, 102, 103, 104, 105, 106) gekrümmt sind, **dadurch gekennzeichnet, dass**
Bereiche der miteinander verbundenen benachbarten Seiten eine gekrümmte, von der Mitte des Durchgangsloches (100) her gesehen, zu einem äußeren Rand hin konvexe Form aufweisen.

## Revendications

1. Plaque de support de tubes (20) d'un générateur de vapeur (10), qui est adaptée pour être disposée dans le générateur de vapeur (10) et a une pluralité de trous traversants (100) formés dans celle-ci pour le passage de tubes de transfert de chaleur (19), dans laquelle
une forme de trou du trou traversant (100) est une forme hexagonale, et chaque côté alterné des côtés formant la forme hexagonale a une saillie (100a, 100b, 100c) formée dans celui-ci, la saillie (100a, 100b, 100c) faisant saillie vers un centre du trou traversant (100),
un agencement des trous traversants (100) est tel qu'une pluralité de rangées des trous traversants (100) est agencée en parallèle, chaque rangée incluant les trous traversants (100) agencés dans une ligne droite avec un pas constant, et que des positions des trous traversants (100) agencés dans chaque rangée (110) des trous traversants (100) sont décalées, d'une moitié du pas, de positions correspondantes des trous traversants (100) agencés dans la rangée adjacente (120) des trous traversants (100), et
des parties d'extrémité des côtés (101, 102, 103, 104, 105, 106) sont courbées,
**caractérisée en ce que**
des parties des côtés adjacents reliés ensemble présentent une forme courbée convexe vers une périphérie extérieure, comme vu depuis le centre du trou traversant (100).
